# EUROPÄISCHE PATENTANMELDUNG

(11) **EP 0 834 431 A1**
(43) Veröffentlichungstag der Anmeldung: **08.04.1998**
(21) Anmeldenummer: 97116596.4
(22) Anmeldetag: 24.09.1997
(51) Int. Cl.: B60T 3/00, B65G 69/00

(54) **Anfahrsperre für Kraftfahrzeuge**

(30) Priorität: 07.10.1996 DE 19641290
(71) Anmelder: BAYER AG, 51368 Leverkusen (DE)
(72) Erfinder: Staffe, Adolf, Dr., 51373 Leverkusen (DE); Prison, Wolfgang, 51371 Leverkusen (DE); Paul, Wolfgang, 51373 Leverkusen (DE)

(57) **Zusammenfassung**

Die Erfindung betrifft eine Sicherheitsanfahrsperre für motorgetriebene Fahrzeuge, insbesondere für Nutzfahrzeuge und Lastkraftwagen, mit deren Hilfe das Wegfahren des Fahrzeuges wirksam verhindert werden kann, insbesondere bei nicht abgeschlossenen Be- oder Entladevorgängen am Fahrzeug. Die Anfahrsperre besteht aus einem mit Rollelementen (4) versehen Keil (1), der gegebenenfalls mit einem zusätzlichen lösbaren Befestigungsmittel (5, 8) versehen ist, das das einfache Entfernen des Keils von den Rädern des Fahrzeugs verhindert.

## Beschreibung

Die Erfindung betrifft eine Sicherheitsanfahrsperre für motorgetriebene Fahrzeuge, insbesondere für Nutzfahrzeuge und Lastkraftwagen, mit deren Hilfe das Wegfahren des Fahrzeugs wirksam verhindert werden kann, insbesondere während des Be- oder Entladevorgangs am Fahrzeug. Die Anfahrsperre besteht aus einem mit Rollenelementen versehenen Keil, der gegebenenfalls mit einem zusätzlichen lösbaren Befestigungsmittel versehen ist, das das einfache Entfernen des Keils von den Rädern des Fahrzeugs verhindert.

Beim Beladen oder Entladen von Nutzfahrzeugen kommt es immer wieder zu grundsätzlich vermeidbaren Unfällen, die dadurch entstehen, daß das Fahrzeug noch während des Ladevorgangs von der Ladestelle, z.B. einer Laderampe weggefahren wird. Das Ladepersonal kann dadurch gefährdet werden. Wenn z.B. ein Gabelstaplerfahrer mit seinem Gabelstapler gerade zu dem Zeitpunkt die Grenze Laderampe-LKW überfährt, zu dem der LKW die Laderampe verläßt, ist die Gefährdung des Gabelstaplerfahrers durch Sturz von der Rampe extrem hoch.

Hinzu kommt, daß man aus rechtlichen Gründen einem betriebsfremden LKW-Fahrer nicht in der Zeit des Ladevorgangs den Schlüssel für sein Fahrzeug nehmen kann, um damit z.B. den Zeitpunkt des Wegfahrens zu kontrollieren. Es sind daher eine Reihe von passiven oder aktiven Mitteln eingesetzt worden um ein vorzeitiges Anfahren des Fahrzeugs zu verhindern. Stopptafeln oder Ampelanlagen, die vor dem Führerhaus des Fahrzeugs aufgestellt werden und den Fahrer auf den Beladevorgang hinweisen sollen, werden vielfach übersehen und stellen kein wirksames Mittel dar.

Seit langer Zeit werden einfache Keile verwendet, um zu verhindern, daß Fahrzeuge aller Art unplanmäßig während des Beladens wegfahren. Bei nicht motorgetriebenen Fahrzeugen sind Keile eine effektive Wegfahrsperre. Bei motorgetriebenen Fahrzeugen mit geringer Motorleistung (z.B. kleiner 10 kW) kann der einfache Keil ebenfalls verhindern, daß ein Fahrzeug unplanmäßig wegfährt. Bei modernen motorgetriebenen Fahrzeugen wie beispielsweise LKWs, LKW-Zugmaschinen, Wohnwagen oder PKWs ist die Motorleistung jedoch erheblich größer als 10 kW. Bei solchen Fahrzeugen stellt ein normaler Keil kein wirksames Hindernis dar um ein unplanmäßiges Anfahren oder Wegfahren des Fahrzeugs zu verhindern.

Es ist weiter bekannt geworden mit Hilfe eines sogenannten "Inter-Lok-Systemes" wirkungsvoll ein unplanmäßiges Anfahren zu verhindern. Dabei wird am Ladeplatz hydraulisch eine Metallplatte unter den Unterfahrschutz, z.B. eines LKW's gehoben, die ein Anfahren des Fahrzeugs verhindern soll. Im schlimmsten Fall wird aber ein leistungsstarker LKW beim Anfahren schlichtweg einen Teil der Ladefläche oberhalb des Unterfahrschutzes abreißen. Es lassen sich dann also damit letztlich Unfälle nicht ausschließen. Außerdem ist diese Sperre auf Fahrzeuge mit Unterfahrschutz beschränkt. Diese Art von Sperre hat außerdem noch den Nachteil, daß ihre Herstellkosten vergleichsweise hoch sind. Da das hydraulische System vor der Verladerampe einbetoniert werden muß, ist es nicht nur unflexibel in der Anwendung sondern auch weniger umweltfreundlich. Außerdem kommt es im praktischen Betrieb bei tiefen Temperaturen, wenn Schnee und Eis die vor der Laderampe befindliche Fläche bedecken, zu einer gewissen Störanfälligkeit einer solchen Sperre.

Es ist weiterhin eine LKW-Verriegelung an Verladerampen bekanntgeworden. Diese Vorrichtung besteht aus einem absperrbaren Metallstab, der über eine Lagerung in einer am Ladeplatz einbetonierten Schiene in Anfahrtrichtung des Fahrzeugs bewegt wird, auf knapp unter Achsenhöhe vor die Zwillingsreifen z.B. eines LKW's eingeschwenkt und an die Reifen herangeschoben wird. Die Nachteile dieser Vorrichtung sind vergleichbar mit denen des "Inter-Lok-Systems". Der Einsatz ist auf den Ort der Verladestelle beschränkt durch die beschriebene Festinstallation. Die Herstellkosten sind ebenfalls beträchtlich.

Der Erfindung liegt die Aufgabe zugrunde eine wirksame Anfahrsperrvorrichtung zu entwickeln, die die Nachteile der Vorrichtungen des Standes der Technik nicht aufweist, einfach einzusetzen ist und kostengünstig zu fertigen ist.

Die Aufgabe wird erfindungsgemäß gelöst durch eine Anfahrsperrvorrichtung für motorgetriebene Fahrzeuge mit Antriebsrädern, insbesondere für Nutzfahrzeuge und Lastkraftwagen, bestehend aus einem keilförmigen Unterbau mit einer schiefen Rollfläche auf der ein Satz von mindestens drei Rollelementen verteilt ist, die dem Antriebsrad des Fahrzeuges zugewendet werden und ein Durchdrehen des Antriebsrades auf der Rollfläche beim Anfahren des Fahrzeuges bewirken.

In einer einfachen Variante der Erfindung sind auf einer schiefenen Ebene des Keils Rollen angeordnet, die dazu führen, daß sich die Antriebsräder eines motorgetriebenen Fahrzeugs, das ohne Freigabe anfährt, dann durchzudrehen beginnen, sobald sie die ersten Rollen des Keils erreicht haben.

Desweiteren kann der Fahrer des motorgetriebenen Fahrzeugs dann nicht einfach die obengenannte Anfahrsperre entfernen, wenn diese in einer bevorzugten Ausführung mit einem zusätzlichen absperrbaren spazierstockähnlichen Bügel versehen ist, der so um einen Reifen gelegt wird, daß er nur nach Entriegelung eines Schlosses entfernt werden kann. Nur nach Entfernung des Bügels kann die obengenannte Anfahrsperre von den Antriebsrädern des motorgetriebenen Fahrzeugs weggezogen werden. Wenn der Schlüssel für den absperrbaren Bügel der Anfahrsperre nur von dem die Be- oder Entladung Durchführenden verwahrt oder bedient wird, ist ein unplanmäßiges Wegfahren des motorgetriebenen Fahrzeugs und damit eine Gefährdung desjenigen der die Be- oder Entladung des Fahrzeugs durchführt, absolut unmöglich.

Folgende Anwendungen der erfindungsgemäßen Vorrichtung sind grundsätzlich denkbar:
Die Verwendung einer einzigen Anfahrsperre wird dann wirksam, wenn das motorgetriebene Fahrzeug, das be- oder entladen werden soll, nur eine Antriebsachse hat und mit dem Heck an einer Laderampe steht und von der Laderampe aus über die Hecköffnung be- oder entladen wird. Steht das motorgetriebene Fahrzeug mit dem Heck an einer Laderampe und hat zwei Antriebsachsen, so muß vor je einem Rad einer Antriebsachse eine Anfahrsperre gemäß der Erfindung angebracht werden.

Hat das motorgetriebene Fahrzeug eine Antriebsachse und steht mit der Breitseite an einer Laderampe und wird von dort aus be- oder entladen, so werden zwei Anfahrsperren vor oder hinter dem Rad der Antriebsachse angebracht und gegebenenfalls mit je einem absperrbaren Bügel versehen.

Hat das motorgetriebene Fahrzeug zwei Antriebsachsen und steht mit der Breitseite an einer Laderampe und wird von dort aus be- oder entladen, so werden je zwei Anfahrsperren vor je einem Rad oder hinter je einem Rad der Antriebsachse angebracht und gegebenenfalls mit je einem absperrbaren Bügel versehen.

Die erfindungsgemäße Anfahrsperre weist gegenüber den bekannten Anfahrsperrmitteln folgende Vorteile auf:
Die erfindungsgemäße Anfahrsperre ist flexibel überall einsetzbar, da sie nicht wie die beschriebenen stationären Systeme, z.B. an irgendeinen betonierten Befestigungssockel, gebunden ist. Aufgrund ihres einfachen Aufbaus ist sie kostengünstiger herzustellen als ein stationäres System. Die Anfahrsperre ist störunanfällig und auch bei ungünstigen Witterungsverhältnissen z.B. bei Schnee und Eis jederzeit einsatzbereit und beweist in Praxisversuchen eine hohe Zuverlässigkeit.

Da der Untergrund nicht betoniert werden muß und auch keine Gefahr durch gegebenenfalls auslaufendes Hydrauliköl besteht ist die erfindungsgemäße Vorrichtung umwentfreundlicher als z.B. das obengenannte "Inter-Lok-System". Eine Beschädigung des Fahrzeugs z.B. bei unbeabsichtigtem Anfahren wird mit Verwendung der erfindungsgemäßen Vorrichtung vermieden.

Durch die absolute Zuverlässigkeit, die leichte universelle Anwendbarkeit, und höchste Wirksamkeit wird die Unfallgefahr durch unplanmäßiges Wegfahren eines motorbetriebenen Fahrzeugs praktisch ausgeschlossen, wenn nur das für die Beund Entladung zuständige Bedienungspersonal den Zeitpunkt des Wegfahrens durch seine Schlüsselgewalt über den abschließbaren Bügel der bevorzugten Anfahrsperre bestimmt.

Der Wartungsaufwand für die Anfahrsperre ist sehr gering. Sollte ein Rollelement, z.B. eine Walze, auf der schiefen Ebene der Anfahrsperre klemmen, so kann sie mit wenigen Handgriffen ausgetauscht werden. Die gesamte Anfahrsperre wird durch eine einzelne klemmende Rolle nicht unwirksam.

Die erfindungsgemäße Vorrichtung kann aus verschiedensten Materialien gefertigt werden. Beispielhaft seien erwähnt Kunststoff, Leichtmetall, aber auch Stahl.

Die Rollelemente können beispielsweise Rollen oder Walzen aus Kunststoff oder Hartgummi mit Metallachse oder aus Metall mit Metallachse gefertigt werden. Die Achse kann selbstschmierend sein oder durch Verwendung von Kugellagern drehbar gelagert werden. Auf der schiefen Rollfläche können die Rollen in ihrer Länge entweder die ganze Breite der Fläche einnehmen oder es können auch mehrere kurze Rollen nebeneinander angeordnet werden. Von besonderem Vorteil ist der Einsatz mehrerer Kunststoff-, Metall- oder Glaskugeln als Rollelemente, die in selbstschmierenden Betten gelagert sind.

Die Rollfläche ist bevorzugt eine schiefe Ebene.

Der Winkel zwischen der Stellfläche der Vorrichtung und einer solchen schiefenen Ebene beträgt vorzugsweise von 10° bis 75°.

Die Verwendung der erfindungsgemäßen Vorrichtung die auch Gegenstand der Erfindung ist verhindert, daß motorgetriebene Fahrzeuge, beispielsweise LKW's oder Tankfahrzeuge, die z.B. vor einem Betrieb ohne Laderampe be- oder entladen werden, ohne Freigabe durch das Bedienungspersonal des Betriebes die Ladestelle verlassen, bevor z.B. angeflanschte Leitungen demontiert sind z.B. im Falle von Übergabe oder Übernahme von flüssigen Produkten. In diesem Falle müssen wie erwähnt zwei erfindungsgemäße Wegfahrsperren angebracht werden, damit das motorgetriebene Fahrzeug weder in Vorwärts- noch in Rückwärtsrichtung den Ladebereich verlassen kann. Hierbei ist insbesondere je ein Paar gegenüberliegende Anfahrsperren über eine lösbare Stange miteinander verbunden.

Die erfindungsgemäße Vorrichtung kann auch als Wegfahrsperre an widerrechtlich abgestellten Fahrzeugen eingesetzt werden. In solchen Fällen werden die Antriebsräder des Fahrzeugs mit zwei einander zugewandten Anfahrsperren umklammert, die miteinander insbesondere durch zusätzliche arretierbare Befestigungsstangen verbunden sind.

Weitere bevorzugte Ausführungsformen sind den abhängigen Ansprüchen zu entnehmen.

Die Erfindung wird nachstehend anhand der Figuren beispielhaft näher erläutert. Es zeigen
- Fig. 1: die schematische Seitenansicht einer erfindungsgemäßen Vorrichtung
- Fig. 2a, b: die schematische Seitenansicht bzw. Vorderansicht der Vorrichtung zur Erläuterung der Verwendung der Vorrichtung
- Fig. 3: einen Schnitt durch eine Variante der Erfindung mit einer besonderen Anordnung der Rollelemente
- Fig. 4: eine schematische Aufsicht zur Erläuterung der Anwendung eines absperrbaren Bügels

### Beispiele

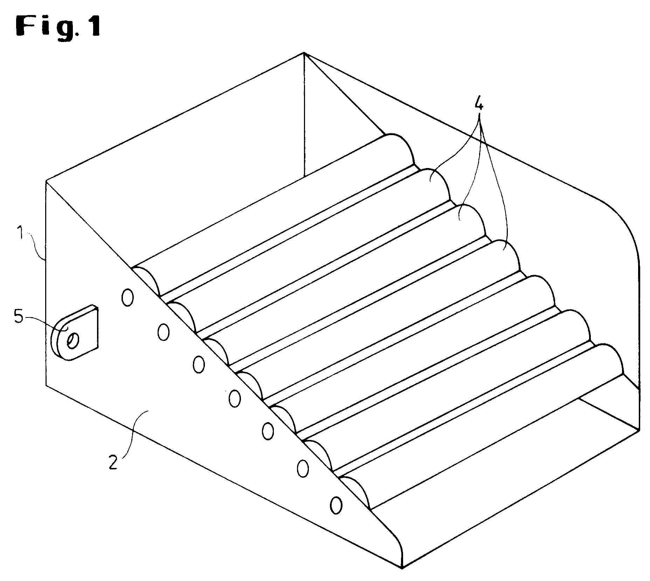

Fig. 1 zeigt in schematischer Darstellung die erfindungsgemäße Vorrichtung, kurz Anfahrsperre genannt. Es ist dies die einfachste Ausführungsform. Die in einer schiefen Ebene 3 angebrachten Rollen 4 sind entweder aus Metall oder Kunststoff hergestellt. Die freie Drehbarkeit der Rollen 4 wird durch Kugellager oder selbstschmierende Gleitlager gewährleistet. Die in Fig. 1 gezeigten Rollen 4, die die ganze Breite der Vorrichtung einnehmen, können auch jeweils einzeln ersetzt sein durch mehrere, insbesondere zwei bis acht, nebeneinanderliegende schmale Rollen.

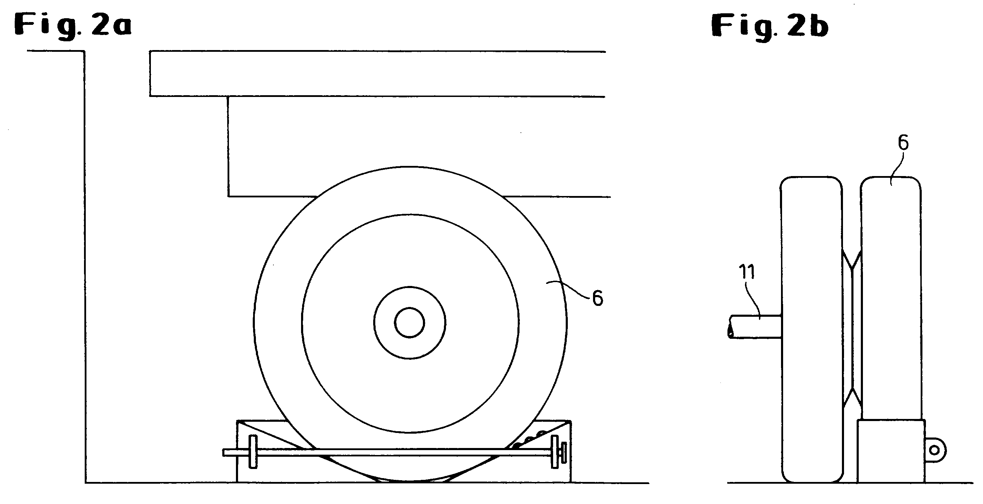

Die Figuren 2a und 2b zeigen die Anbringung von zwei erfindungsgemäßen Anfahrsperren an den Antriebsrädern 6 eines Lastkraftwagens. Schematisch ist auch die Absperrstange 7 gezeigt, die durch je eine an der Anfahrsperre 1 angebrachte Öse 5 durchgeführt wird und mit einem Vorhängeschloß (nicht gezeigt) abgesperrt wird. Der Schlüssel für dieses Vorhängeschloß wird vom betrieblichen Bedienungspersonal verwaltet. Erst nach Freigabe durch den Betrieb wird das Wegfahren des motorgetriebenen Fahrzeugs ermöglicht durch Aufschließen des Vorhängeschlosses und Entfernen der Anfahrsperre.

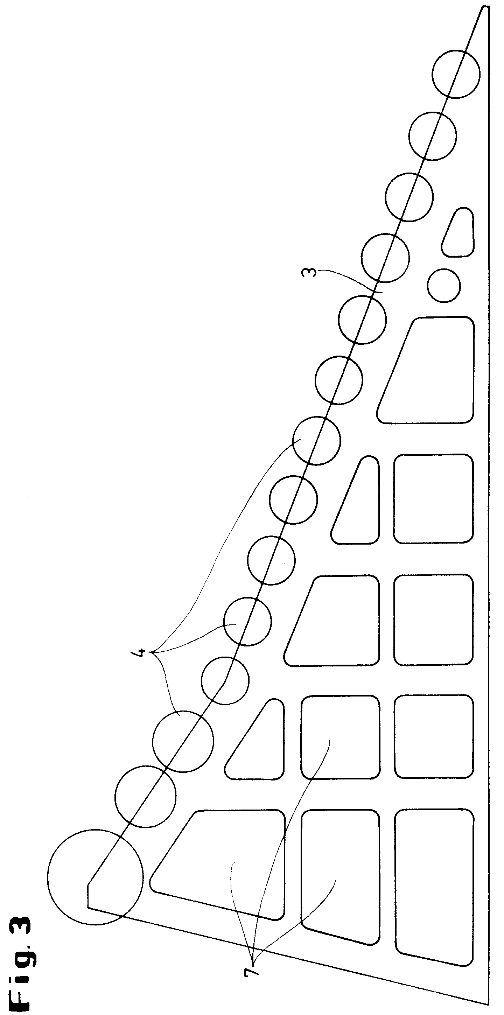

Fig. 1 zeigt schematisch die in der Anfahrsperre fest verankerte Öse 5 für den Metallstab 8, der ein Entfernen der Anfahrsperre durch z.B. den Fahrer des motorgetriebenen Fahrzeugs ohne Freigabe durch das Bedienungspersonal verhindert. Fig. 3 zeigt den Querschnitt durch eine besondere Ausführungsform der Anfahrsperre 1. Die eingezeichneten Löcher 7 bringen eine Gewichtsreduzierung wenn die Anfahrsperre beispielsweise aus Metall gefertigt wird. Ohne die Gewichtsreduzierung ist das Gewicht der Anfahrsperre unter Umständen um ca. 20 bis 50 % höher. Beispielsweise wiegt eine massive Ausführung der Anfahrsperre für LKW's bis 25 t ca. 21 kg, nach Gewichtsreduzierung durch die genannten Ausnehmungen ca. 14 kg (Gewichtsreduzierung -33 %). Bei einer weiteren bevorzugten Ausführungsform aus Kunststoff wiegt die Anfahrsperre 1 ca. 12 kg.

Die obersten vier Rollen 4' sind in der Anordnung nach Fig. 3 in einer schiefen Ebene 3' angeordnet, die mit der Stellfläche 10 der Anfahrsperre einen größeren Winkel einschließt als die Montageebene 3 der unteren Rollen. Zusätzlich sind Rollen 4' nach Fig. 3 mit steigendem Durchmesser vorgesehen um eine Anpassung der Rollfläche an die Kontur des Antriebsrades 6 zu ermöglichen.

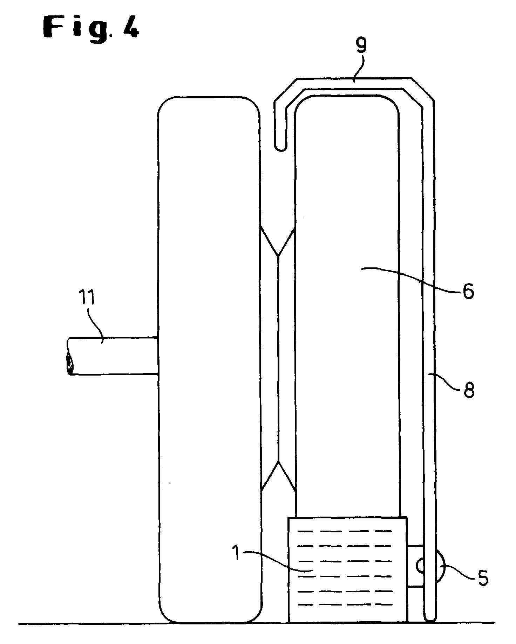

Fig. 4 zeigt eine mögliche Ausführungsform des Bügels 8 der durch die Öse 5 an der Anfahrsperre 1 gezogen wird, wobei der gebogene Teil 9 des Bügels 8 um die Reifen 6 bzw. um die Antriebsachse 11 gelegt wird.

## Patentansprüche

1. Anfahrsperrvorrichtung (1) für motorgetriebene Fahrzeuge mit Antriebsrädern (6), insbesondere für Nutzfahrzeuge und Lastkraftwagen, bestehend aus einem keilförmigen Unterbau (2) mit einer schiefen Rollfläche (3) in der ein Satz von mindestens drei Rollelementen (4) verteilt ist die dem Antriebsrad (6) des Fahrzeugs zugewendet werden und ein Durchdrehen des Antriebsrades (6) auf der Rollfläche (3) beim Anfahren des Fahrzeugs bewirken.

2. Vorrichtung nach Anspruch 1, dadurch gekennzeichnet, daß sie ein zusätzliches lösbares Befestigungselement (5, 8) aufweist, das ein einfaches Entfernen der Vorrichtung (1) von den Rädern (6) des Fahrzeugs verhindert.

3. Vorrichtung nach den Ansprüchen 1 bis 2, dadurch gekennzeichnet, daß das Befestigungselement (5, 8) ein abschließbarer Metallbügel (8) ist der über eine Öse (5) mit der Vorrichtung (1) verbunden ist und dessen Krümmung (9) im verschlossenen Zustand eng um die Radachse oder den Reifen des Antriebsrades (6) des Fahrzeugs greift.

4. Vorrichtung nach den Ansprüchen 1 bis 3, dadurch gekennzeichnet, daß die Rollelemente (4) als auf der Rollfläche (3) gelagerte frei drehbare Kugeln oder Rollen ausgeführt sind.

5. Vorrichtung nach Anspruch 1 bis 4, dadurch gekennzeichnet, daß die Rollfläche (3) eine ebene Fläche ist.

6. Vorrichtung nach Anspruch 5, dadurch gekennzeichnet, daß der Winkel zwischen der Stellfläche (10) und der schiefen ebenen Rollfläche (9) 10° bis 75° beträgt.

7. Vorrichtung nach Anspruch 1 bis 4, dadurch gekennzeichnet, daß die Rollfläche (3) aus zwei oder mehreren ebenen Flächen mit steigendem Winkel zur Stellfläche (3) der Vorrichtung (1) besteht auf denen die Rollelemente angeordnet sind.

8. Vorrichtung nach Anspruch 1 bis 7, dadurch gekennzeichnet, daß die Rollelemente (4) so angeordnet bzw. bemaßt sind, daß die Abrollfläche der Vorrichtung (1) der Kontur des Antriebsrades (6) angepaßt ist.
